# EUROPEAN PATENT APPLICATION

(11) **EP 3 750 944 A1**
(43) Date of publication of application: **16.12.2020**
(21) Application number: 19751536.4
(22) Date of filing: 31.01.2019
(51) Int. Cl.: C08J 3/14, C08G 61/12, C08G 85/00

(54) **METHOD FOR PRODUCING POLYMER**

(30) Priority: 09.02.2018 JP 2018022547
(71) Applicant: SUMITOMO CHEMICAL COMPANY LIMITED, Chuo-ku Tokyo 104-8260 (JP)
(72) Inventor: TERAI, Hiroki, Osaka-shi, Osaka 554-8558 (JP)
(74) Representative: J A Kemp LLP
(86) International application number: PCT/JP2019/003280
(87) International publication number: WO 2019/155972

(57) **Abstract**

An object of the present invention is to provide a method for producing a polymer compound having sufficiently low polydispersity. A method for producing a polymer compound, comprising a step of bringing a solution containing a polymer compound into contact with a mixed solvent composed of two or more organic solvents to precipitate the polymer compound, wherein the two or more organic solvents include a first organic solvent and a second organic solvent which are different from each other, and the first organic solvent is at least one selected from solvent A, and the second organic solvent is at least one selected from solvent A and solvent B:
[Solvent A]
A solvent in which the polar term P1 (MPa^{0.5}) of the Hansen solubility parameter is 0 ≤ P1 ≤ 10, and the hydrogen bond term H1 (MPa^{0.5}) of the Hansen solubility parameter is 0 ≤ H1 ≤ 10.
[Solvent B]
A solvent in which the polar term P2 (MPa^{0.5}) of the Hansen solubility parameter is 10 < P2 and/or the hydrogen bond term H2 (MPa^{0.5}) of the Hansen solubility parameter is 10 < H2.

## Description

### Technical field

The present invention relates to a method for producing a polymer compound.

### Background Art

As a material of a light emitting device such as an organic electroluminescent (hereinafter, referred to also as "organic EL") device or the like, a polymer compound is used, for example. In order to improve the characteristics of the device, it is desirable that the polymer compound has low polydispersity (Mw/Mn).

The polymer compound can be synthesized, for example, by subjecting an aromatic diboronic acid and an aromatic dihalide to the Suzuki coupling reaction in the presence of a transition metal complex. For example, Non-Patent Document 1 reports a method in which a diboronic acid of fluorene and a dibromo compound of triarylamine are subjected to the Suzuki coupling reaction to synthesize a polymer compound. However, it was difficult to obtain a polymer compound having sufficiently low polydispersity with this method.

As a method for reducing the polydispersity of the polymer compound, there are, for example, a method using an adsorbent such as chromatograph or the like and a method of extracting from a solid such as Soxhlet or the like, but they are not necessarily satisfactory.

### [Prior Art Document]

### [Non-Patent Document]

Non-Patent Document 1: RSC Advances, 2015, 5, p101826-101833

### Summary of the Invention

### Problem to be Solved by the Invention

The present invention has an object of providing a method for producing a polymer compound having sufficiently low polydispersity.

### Means for Solving the Problem

The present invention provides the following [1] to [10].
[1] A method for producing a polymer compound, which comprises a step of bringing a solution containing a polymer compound into contact with a mixed solvent composed of two or more organic solvents to precipitate the polymer compound, wherein
   the two or more organic solvents are composed of a first organic solvent and a second organic solvent which are different from each other, and
   the first organic solvent is at least one selected from solvent A, and the second organic solvent is at least one selected from solvent A and solvent B:
   [Solvent A]
      A solvent in which the polar term P1 (MPa^{0.5}) of the Hansen solubility parameter is 0 ≤ P1 ≤ 10, and the hydrogen bond term H1 (MPa^{0.5}) of the Hansen solubility parameter is 0 ≤ H1 ≤ 10,
   [Solvent B]
      A solvent in which the polar term P2 (MPa^{0.5}) of the Hansen solubility parameter is 10 < P2 and/or the hydrogen bond term H2 (MPa^{0.5}) of the Hansen solubility parameter is 10 < H2.
[2] The production method according to [1], wherein the above-described first organic solvent is at least one selected from solvent A, and the above-described second organic solvent is at least one selected from solvent B.
[3] The production method according to [2], wherein the above-described first organic solvent is at least one selected from solvent A, and the above-described second organic solvent is at least one selected from solvent B1:
   [Solvent B1]
   A solvent in which the polar term P2 (MPa^{0.5}) of the Hansen solubility parameter is 10 < P2, and the hydrogen bond term H2 (MPa^{0.5}) of the Hansen solubility parameter is 10 < H2.
[4] The production method according to [3], wherein the above-described first organic solvent is at least one selected from solvent A1, and the above-described second organic solvent is at least one selected from solvent B1:
   [Solvent A1]
   A solvent in which the polar term P1 (MPa^{0.5}) of the Hansen solubility parameter is 0 ≤ P1 ≤ 5, and the hydrogen bond term H1 (MPa^{0.5}) of the Hansen solubility parameter is 0 ≤ H1 ≤ 4.
[5] The production method according to [1], wherein the above-described first organic solvent is at least one selected from solvent A, and the above-described second organic solvent is at least one selected from solvent A.
[6] The production method according to [5], wherein the above-described first organic solvent is at least one selected from solvent A, and the above-described second organic solvent is at least one selected from solvent A2:
   [Solvent A2]
   A solvent in which the polar term P1 (MPa^{0.5}) of the Hansen solubility parameter is 5 < P1 ≤ 10 and the hydrogen bond term H1 (MPa^{0.5}) of the Hansen solubility parameter is 4 < H1 ≤ 10.
[7] The production method according to [6], wherein the above-described first organic solvent is at least one selected from solvent A2, and the above-described second organic solvent is at least one selected from solvent A2.
[8] The production method according to any one of [1] to [7], further comprising a solvent treatment step of adding a third organic solvent after the above-described precipitation step, wherein the third organic solvent is at least one selected from solvent C:
   [Solvent C]
   A solvent in which the polar term P3 (MPa^{0.5}) of the Hansen solubility parameter is 10 < P3 and/or the hydrogen bond term H3 (MPa^{0.5}) of the Hansen solubility parameter is 10 < H3.
[9] The production method according to any one of [1] to [8], wherein the above-described polymer compound is a polymer compound composed of a constitutional unit represented by the formula (1): 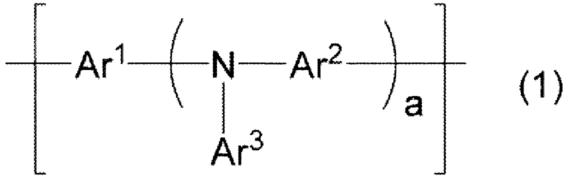 [in the formula,
   Ar¹ and Ar² each independently represent a divalent aromatic hydrocarbon group, a divalent heterocyclic group, or a group in which a divalent aromatic hydrocarbon group and a divalent heterocyclic group are bonded, and the foregoing groups optionally have a substituent. When a plurality of Ar² are present, they may be the same or different.
   Ar³ represents a monovalent aromatic hydrocarbon group or a monovalent heterocyclic group, and the foregoing groups optionally have a substituent. When a plurality of Ar³ are present, they may be the same or different.
   a represents an integer of 0 to 2.].
[10] A method for adjusting the polydispersity of a polymer compound, which comprises a precipitation step of bringing a solution containing a polymer compound into contact with a mixed solvent composed of two or more organic solvents to precipitate the polymer compound, wherein
   the two or more organic solvents include a first organic solvent and a second organic solvent which are different from each other, and
   the first organic solvent is at least one selected from solvent A, and the second organic solvent is at least one selected from solvent A and solvent B:
   [Solvent A]
      A solvent in which the polar term P1 (MPa^{0.5}) of the Hansen solubility parameter is 0 ≤ P1 ≤ 10, and the hydrogen bond term H1 (MPa^{0.5}) of the Hansen solubility parameter is 0 ≤ H1 ≤ 10;
   [Solvent B]
      A solvent in which the polar term P2 (MPa^{0.5}) of the Hansen solubility parameter is 10 < P2 and/or the hydrogen bond term H2 (MPa^{0.5}) of the Hansen solubility parameter is 10 < H2.
[11] A method for producing a light emitting device having an anode, a cathode and an organic layer, which comprises a step of forming the above-described organic layer using a polymer compound produced by the method for producing a polymer compound according to any one of [1] to [9].

### Effect of the Invention

According to the method of the present invention, a polymer compound having sufficiently low polydispersity can be produced. According to the method of the present invention, it is also possible to adjust the polydispersity of the polymer compound. The polymer compound produced by the method of the present invention is suitably used as a material for an organic EL device and the like.

### Modes for Carrying Out the Invention

### 1. Explanation of common terms

The terms used in the present specification will be explained below.

The "hydrogen atom" may be a light hydrogen atom or a heavy hydrogen atom.

The "alkyl group" means a linear, branched or cyclic alkyl group. The number of carbon atoms of the linear alkyl group is usually 1 to 50, preferably 3 to 30, and more preferably 4 to 20. The number of carbon atoms of the branched and cyclic alkyl groups is usually 3 to 50, preferably 3 to 30, and more preferably 4 to 20. The alkyl group includes, for example, a methyl group, an ethyl group, a n-propyl group, an isopropyl group, a n-butyl group, an isobutyl group, a tert-butyl group, a n-pentyl group, an isoamyl group, a 2-ethylbutyl group, a n-hexyl group, a cyclohexyl group, a n-heptyl group, a cyclohexylmethyl group, a cyclohexylethyl group, a n-octyl group, a 2-ethylhexyl group, a 3-n-propylheptyl group, a n-decyl group, a 3,7-dimethyloctyl group, a 2-ethyloctyl group, a 2-n-hexyl-decyl group, a n-dodecyl group and the like.

The "alkyl group" optionally has a substituent, and the substituent includes, for example, a fluorine atom, a cyano group, an aryl group, a monovalent heterocyclic group, an alkoxy group, an aryloxy group, a substituted amino group, a carboxyl group, an esterified carboxyl group, an alkenyl group, an alkynyl group, a metal complex-containing group and the like. The "alkyl group" may have 1 to 20 substituents selected from these substituents. The substituted alkyl group includes, for example, a trifluoromethyl group, a pentafluoroethyl group, a perfluorobutyl group, a perfluorohexyl group, a perfluorooctyl group, a 3-phenylpropyl group, a 3-(4-methylphenyl)propyl group, a 3-(3,5-di-n-hexylphenyl)propyl group, a 6-ethyloxyhexyl group and the like.

The "aryl group" means a monovalent group obtained by removing from an aromatic hydrocarbon one hydrogen atom bonded directly to a carbon atom constituting the ring. The number of carbon atoms of the aryl group is usually 6 to 60, preferably 6 to 20, and more preferably 6 to 10. The aryl group includes, for example, a phenyl group, a 1-naphthyl group, a 2-naphthyl group, a 1-anthracenyl group, a 2-anthracenyl group, a 9-anthracenyl group, a 1-pyrenyl group, a 2-pyrenyl group, a 4-pyrenyl group, a 2-fluorenyl group, a 3-fluorenyl group, a 4-fluorenyl group and the like.

The "aryl group" optionally has a substituent, and the substituent includes, for example, a fluorine atom, a cyano group, an alkyl group, an aryl group, a monovalent heterocyclic group, an alkoxy group, an aryloxy group, a substituted amino group, a carboxyl group, an esterified carboxyl group, an alkenyl group, an alkynyl group, a metal complex-containing group and the like. The "aryl group" may have 1 to 10 substituents selected from these substituents. The substituted aryl group includes, for example, a pentafluorophenyl group, a 4-hexylphenyl group, a 4-phenylphenyl group and the like.

The "alkoxy group" means a linear, branched or cyclic alkoxy group. The number of carbon atoms of the linear alkoxy group is usually 1 to 40, preferably 4 to 10. The number of carbon atoms of the branched and cyclic alkoxy groups is usually 3 to 40, and preferably 4 to 10. The alkoxy group includes, for example, a methoxy group, an ethoxy group, a n-propyloxy group, an isopropyloxy group, a n-butyloxy group, an isobutyloxy group, a tert-butyloxy group, a n-pentyloxy group, a n-hexyloxy group, a cyclohexyloxy group, a n-heptyloxy group, a n-octyloxy group, a 2-ethylhexyloxy group, a n-nonyloxy group, a n-decyloxy group, a 3,7-dimethyloctyloxy group, a lauryloxy group and the like.

The "alkoxy group" optionally has a substituent, and the substituent includes, for example, a fluorine atom, a cyano group, an aryl group, a monovalent heterocyclic group, an alkoxy group, an aryloxy group, a substituted amino group, a carboxyl group, an esterified carboxyl group, an alkenyl group, an alkynyl group, a metal complex-containing group and the like. The "alkoxy group" may have 1 to 10 substituents selected from these substituents.

The "aryloxy group" means a monovalent group obtained by replacing one hydrogen atom bonded directly to a carbon atom constituting a ring of an aromatic hydrocarbon with an oxygen atom. The number of carbon atoms of the aryloxy group is usually 6 to 60, and preferably 7 to 48. The aryloxy group includes, for example, a phenoxy group, a 1-naphthyloxy group, a 2-naphthyloxy group, a 1-anthracenyloxy group, a 9-anthracenyloxy group, a 1-pyrenyloxy group and the like.

The "aryloxy group" optionally has a substituent, and the substituent includes, for example, a fluorine atom, a cyano group, an alkyl group, a monovalent heterocyclic group, an alkoxy group, an aryloxy group, a substituted amino group, a carboxyl group, an esterified carboxyl group, an alkenyl group, an alkynyl group, a metal complex-containing group and the like. The "aryloxy group" may have 1 to 10 substituents selected from these substituents. The substituted aryloxy group includes, for example, a pentafluorophenoxy group, a 4-hexylphenoxy group, a 4-phenylphenoxy group and the like.

The "substituted amino group" means an amino group having two substituents. The substituent includes, for example, an alkyl group, an aryl group (the aryl group may have an alkyl group), a monovalent heterocyclic group, and the like. The substituted amino group includes, for example, a dialkylamino group, a diarylamino group, and a di(mono- or dialkylaryl)amino group, specifically, for example, a dimethylamino group, a diethylamino group, a diphenylamino group, a bis(4-methylphenyl)amino group, a bis(4-tert-butylphenyl)amino group, a bis(3,5-di-tert-butylphenyl)amino group and the like.

The "esterified carboxyl group" means a group represented by the formula: -COOR' (R' represents an alkyl group, an aryl group, a monovalent heterocyclic group or the like). The esterified carboxyl group includes, for example, an alkyloxycarbonyl group and an aryloxycarbonyl group, and specifically, for example, a group represented by -CO₂CH₃, a group represented by -CO₂C₂H₅, a group represented by -CO₂C₆H₅, and the like.

The "alkenyl group" may be any of linear, branched and cyclic. The number of carbon atoms of the linear alkenyl group is usually 2 to 30, and preferably 2 to 20. The number of carbon atoms of the branched and cyclic alkenyl groups is usually 3 to 30, and preferably 4 to 20. The alkenyl group includes, for example, a vinyl group, a 1-propenyl group, a 2-propenyl group, a 2-buten-1-yl group, a 3-buten-1-yl group, a 1-cyclohexenyl group, a 1-norbornyl group, a 2-norbornyl group and the like.

The "alkenyl group" optionally has a substituent, and the substituent includes, for example, a fluorine atom, a cyano group, an aryl group, a monovalent heterocyclic group, an alkoxy group, an aryloxy group, a substituted amino group, a carboxyl group, an esterified carboxyl group, a metal complex-containing group and the like. The "alkenyl group" may have 1 to 20 substituents selected from these substituents. The substituted alkenyl group includes, for example, a 2-phenylethenyl group, a 4-octyl-2-phenylethenyl group and the like.

The "alkynyl group" may be any of linear, branched and cyclic. The number of carbon atoms of the linear alkynyl group is usually 2 to 30, and preferably 2 to 20. The number of carbon atoms of the branched and cyclic alkynyl groups is usually 4 to 30, and preferably 4 to 20. The alkynyl group includes, for example, an ethynyl group, a 1-propynyl group, a 2-propynyl group, a 2-butyn-1-yl group, a 3-butyn-1-yl group and the like.

The "alkynyl group" optionally has a substituent, and the substituent includes, for example, a fluorine atom, a cyano group, an aryl group, a monovalent heterocyclic group, an alkoxy group, an aryloxy group, a substituted amino group, a carboxyl group, an esterified carboxyl group, a metal complex-containing group and the like. The "alkynyl group" may have 1 to 20 substituents selected from these substituents. The substituted alkynyl group includes, for example, a 2-phenylethynyl group, a 4-octyl-2-phenylethynyl group and the like.

The "monovalent aromatic hydrocarbon group" means a monovalent group obtained by removing from an aromatic hydrocarbon one hydrogen atom bonded directly to a carbon atom forming the ring. The number of carbon atoms of the aromatic hydrocarbon is usually 6 to 60, preferably 6 to 20, and more preferably 6 to 10. The monovalent aromatic hydrocarbon group includes, for example, a phenyl group, a 1-naphthyl group, a 2-naphthyl group, a 1-anthracenyl group, a 2-anthracenyl group, a 9-anthracenyl group, a 1-pyrenyl group, a 2-pyrenyl group, a 4-pyrenyl group, a 2-fluorenyl group, a 3-fluorenyl group, a 4-fluorenyl group and the like.

The "monovalent aromatic hydrocarbon group" optionally has a substituent, and the substituent includes, for example, a halogen atom (especially, a fluorine atom), a cyano group, an alkyl group, an aryl group (the aryl group may have 1 to 3 substituents selected from the group consisting of an alkyl group and an alkoxy group), a monovalent heterocyclic group, an alkoxy group, an aryloxy group, a substituted amino group, an alkylene group (a dimethylene group, a trimethylene group, etc.) and the like. The "monovalent aromatic hydrocarbon group" may have 1 to 10 substituents selected from these substituents. The substituted monovalent aromatic hydrocarbon group includes, for example, a 2-phenylphenyl group, a 3-phenylphenyl group, a 4-phenylphenyl group, a benzocyclobutenyl group and the like.

The "divalent aromatic hydrocarbon group" means a divalent group obtained by removing from an aromatic hydrocarbon two hydrogen atoms bonded directly to carbon atoms constituting the ring, and a divalent group obtained by bonding several (for example, 2 to 5) groups selected from the group consisting of such divalent groups. The number of carbon atoms of the divalent aromatic hydrocarbon group is usually 6 to 60, preferably 6 to 30, and more preferably 6 to 18. The divalent aromatic hydrocarbon group includes, for example, a phenylene group, a naphthalenediyl group, an anthracenediyl group, a phenanthrenediyl group, a dihydrophenanthrenediyl group, a naphthacenediyl group, a fluorenediyl group, a pyrenediyl group, a perylenediyl group, a chrysenediyl group and the like.

The "divalent aromatic hydrocarbon group" optionally has a substituent, and the substituent includes, for example, a fluorine atom, a cyano group, an alkyl group, an aryl group (the aryl group may have 1 to 5 substituents selected from the group consisting of an alkyl group, an alkoxy group, a phenyl group and an alkylphenyl group), a monovalent heterocyclic group, an alkoxy group, an aryloxy group, a substituted amino group, a carboxyl group, an esterified carboxyl group, an alkenyl group, an alkynyl group, a metal complex-containing group and the like. The "divalent aromatic hydrocarbon group" may have 1 to 10 substituents selected from these substituents. The divalent aromatic hydrocarbon group optionally having a substituent includes, for example, groups represented by the formula (A-1) to the formula (A-20), and the like. 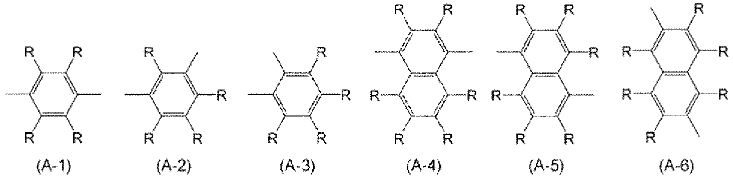 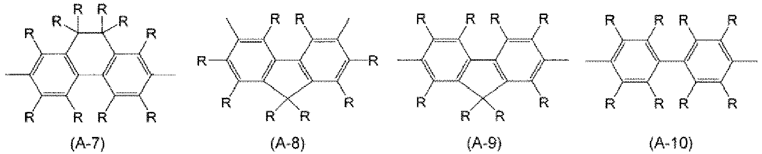 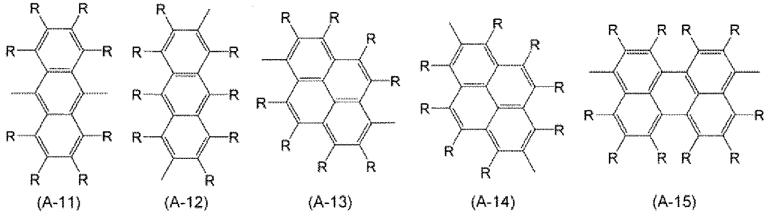 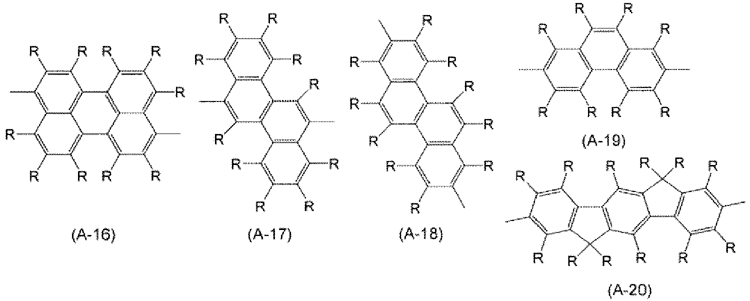 [In the formulae, R represents a hydrogen atom, a fluorine atom, a cyano group, an alkyl group, an aryl group, a monovalent heterocyclic group, an alkoxy group, an aryloxy group, a substituted amino group, a carboxyl group, an esterified carboxyl group, an alkenyl group, an alkynyl group, or a metal complex-containing group. When R is a substitutable group, R optionally has a substituent. When a plurality of R are present, they may be the same or different. Adjacent groups R may be combined together to form a ring together with carbon atoms to which they are attached.]

The "monovalent heterocyclic group" means a monovalent group obtained by removing from a heterocyclic compound one hydrogen atom among hydrogen atoms bonded directly to a carbon atom or a hetero atom constituting the ring. Of the monovalent heterocyclic groups, preferable is a "monovalent aromatic heterocyclic group" obtained by removing from an aromatic heterocyclic compound one hydrogen atom among hydrogen atoms bonded directly to a carbon atom or a hetero atom constituting the ring. The "monovalent heterocyclic group" includes, for example, a thienyl group, a pyrrolyl group, a furyl group, a pyridyl group, a piperidyl group, a quinolyl group, an isoquinolyl group, a pyrimidinyl group, a triazinyl group and the like.

The "aromatic heterocyclic compound" means, for example, any of a compound in which the hetero ring itself shows aromaticity such as oxadiazole, thiadiazole, thiazole, oxazole, thiophene, pyrrole, phosphole, furan, pyridine, pyrazine, pyrimidine, triazine, pyridazine, quinoline, isoquinoline, carbazole, dibenzosilole, dibenzophosphole and the like; a compound in which an aromatic ring is condensed to a hetero ring even if the hetero ring itself shows no aromaticity such as phenoxazine, phenothiazine, dibenzoborol, dibenzosilole, benzopyran and the like; and a compound in which a plurality of such compounds are bonded.

The "monovalent heterocyclic group" optionally has a substituent, and the substituent includes, for example, a halogen atom (especially, a fluorine atom), a cyano group, an alkyl group, an aryl group, a monovalent heterocyclic group, an alkoxy group, an aryloxy group, a substituted amino group, an alkylene group and the like. The monovalent heterocyclic group may have 1 to 5 substituents selected from these substituents.

The "divalent heterocyclic group" means a divalent group obtained by removing from a heterocyclic compound two hydrogen atoms among hydrogen atoms bonded directly to a carbon atoms or a hetero atom constituting the ring. Of the divalent heterocyclic groups, preferable is a "divalent aromatic heterocyclic group" that is a divalent group obtained by removing from an aromatic heterocyclic group two hydrogen atoms among hydrogen atoms bonded directly to a carbon atom or a hetero atom constituting the ring. The "divalent heterocyclic group" includes, for example, divalent groups obtained by removing from an aromatic heterocyclic compound such as pyridine, diazabenzene, triazine, azanaphthalene, diazanaphthalene, carbazole, dibenzofuran, dibenzothiophene, dibenzosilole, phenoxazine, phenothiazine, acridine, dihydroacridine, furan, thiophene, azole, diazole, triazole, oxazole, oxadiazole, thiazole, thiadiazole and the like two hydrogen atoms among hydrogen atoms bonded directly to a carbon atom or a hetero atom constituting the ring, and divalent groups obtained by bonding several (for example, 2 to 4) groups selected from the group consisting of such divalent groups.

The "divalent heterocyclic group" optionally has a substituent, and the substituent includes, for example, a fluorine atom, a cyano group, an alkyl group, an aryl group, a monovalent heterocyclic group, an alkoxy group, an aryloxy group, a substituted amino group, a carboxyl group, an esterified carboxyl group, an alkenyl group, an alkynyl group, a metal complex-containing group and the like. The divalent heterocyclic group may have 1 to 5 substituents selected from these substituents. The divalent heterocyclic group optionally having a substituent is preferably a group represented by the formula (A-21) to the formula (A-45). 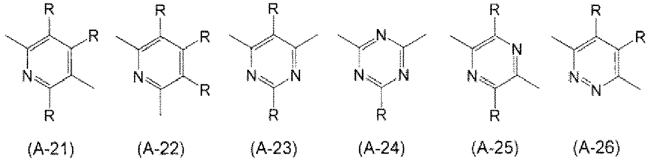 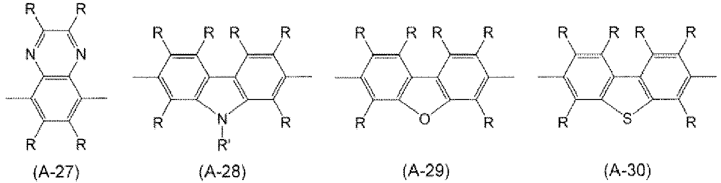 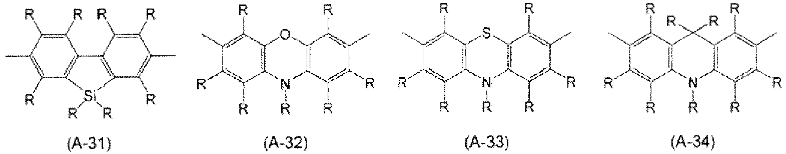 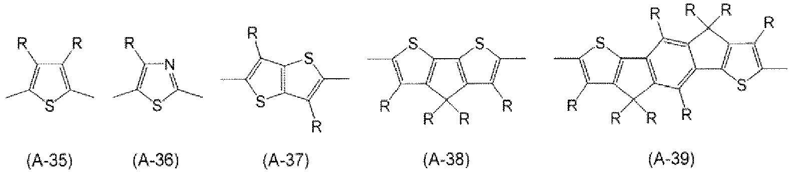 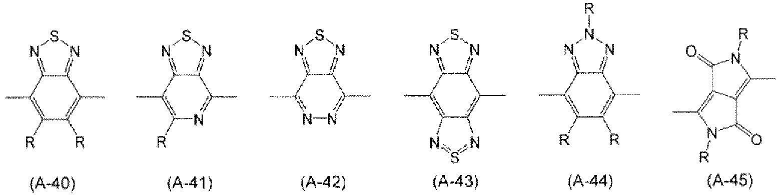 [In the formulae, R represents the same meaning as described above. When a plurality of R are present, they may be the same or different.]

The "group in which a divalent aromatic hydrocarbon group and a divalent heterocyclic group are bonded" means a divalent group in which one or two or more of the above-described divalent aromatic hydrocarbon group and one or two or more of the above-described divalent heterocyclic group are arbitrarily bonded. The divalent aromatic hydrocarbon group and the divalent heterocyclic group include those mentioned above.

The "group in which a divalent aromatic hydrocarbon group and a divalent heterocyclic group are bonded" optionally has a substituent, and the divalent aromatic hydrocarbon group as its partial structure may carry thereon 1 to 10 substituents selected from the above-mentioned fluorine atom, cyano group, alkyl group, aryl group, monovalent heterocyclic group, alkoxy group, aryloxy group, substituted amino group, carboxyl group, esterified carboxyl group, alkenyl group, alkynyl group and metal complex-containing group, and the divalent heterocyclic group as another partial structure may carry thereon 1 to 5 substituents selected from the above-mentioned fluorine atom, cyano group, alkyl group, aryl group, monovalent heterocyclic group, alkoxy group, aryloxy group, substituted amino group, carboxyl group, esterified carboxyl group, alkenyl group, alkynyl group and metal complex-containing group.

The "metal complex-containing group" means a group containing a complex formed from a metal atom (M) and a ligand coordinated with it, and includes, for example, groups represented by any of the formulae (C-1) to (C-4), and the like. 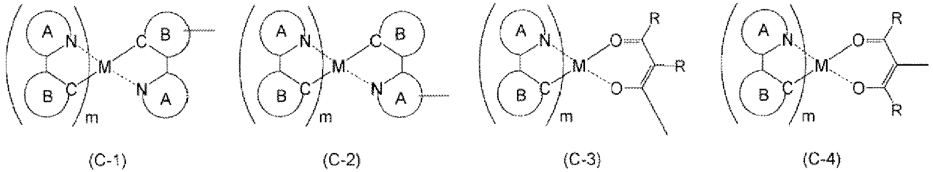 [In the formulae, M is Ir or Pt. m = 2 when M is Ir, while m = 1 when M is Pt. Ring A represents a nitrogen atom-containing cyclic structure which optionally has a substituent. Ring B represents a carbon atom-containing cyclic structure which optionally has a substituent. R represents the same meaning as described above.]

Ring A includes, for example, a nitrogen-containing aromatic ring, specifically, pyridine, quinoline, isoquinoline, pyrimidine, pyrazine, imidazole and the like. Ring B includes, for example, an aromatic ring and a heteroaromatic ring, specifically, benzene, naphthalene, dibenzofuran, dibenzothiophene and the like.

"Ring A" and "Ring B" optionally have a substituent, and the substituent includes, for example, a fluorine atom, a cyano group, an alkyl group, an aryl group, a monovalent heterocyclic group, an alkoxy group, an aryloxy group, a substituted amino group, a carboxyl group, an esterified carboxyl group, an alkenyl group, an alkynyl group and the like. "Ring A" and "Ring B" may have 1 to 4 substituents selected from these substituents.

As R, an alkyl group is preferable, an alkyl group having 1 to 4 carbon atoms is more preferable, and a methyl group is further preferable.

The metal complex-containing group includes, for example, groups represented by formula (C-11) to formula (C-14).

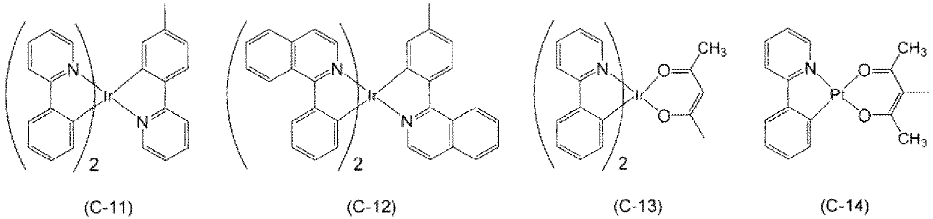

The "metal complex-containing group" optionally has a substituent, and the substituent includes, for example, a fluorine atom, a cyano group, an alkyl group, an aryl group, a monovalent heterocyclic group, an alkoxy group, an aryloxy group, a substituted amino group, and the like. The "metal complex-containing group" may have 1 to 10 substituents selected from these substituents.

### 2. Method for producing polymer compound of the present invention

The method for producing a polymer compound of the present invention includes a step of bringing a solution containing a polymer compound into contact with a mixed solvent composed of two or more organic solvents to precipitate the polymer compound, characterized in that the mixed solvent composed of two or more organic solvents is composed of a first organic solvent and a second organic solvent which are different from each other, and the first organic solvent is at least one selected from solvent A, and the second organic solvent is at least one selected from solvent A and solvent B.

### [Solvent A]

A solvent in which the polar term P1 (MPa^{0.5}) of the Hansen solubility parameter is 0 ≤ P1 ≤ 10, and the hydrogen bond term H1 (MPa^{0.5}) of the Hansen solubility parameter is 0 ≤ H1 ≤ 10.

### [Solvent B]

A solvent in which the polar term P2 (MPa^{0.5}) of the Hansen solubility parameter is 10 < P2 and/or the hydrogen bond term H2 (MPa^{0.5}) of the Hansen solubility parameter is 10 < H2.

By the production method of the present invention, a polymer compound having sufficiently low polydispersity can be obtained.

### 2.1. Hansen solubility parameter

As the polar term and the hydrogen bond term of the Hansen solubility parameter used in the present invention, the values of "HANSEN SOLUBILITY PARAMETERS A User's Handbook Second Edition" are used. Solvents not listed here can be determined according to (HSPiP: Hansen Solubility Parameters in Practice) Program (2-nd edition). The values of the polar term and the hydrogen bond term of the Hansen solubility parameter in the present specification represent values at 25°C.

### 2.2. Precipitation step

In the precipitation step, a solution containing a polymer compound is brought into contact with a mixed solvent composed of two or more organic solvents to precipitate the polymer compound. The two or more organic solvents used in this precipitation step are composed of a first organic solvent and a second organic solvent which are different from each other.

The first organic solvent is at least one (preferably, one or two) selected from the following [solvent A], and the second organic solvent is at least one (preferably, one or two) selected from the following [solvent A] and [solvent B] .

### [Solvent A]

The solvent A is a solvent that easily dissolves a polymer compound, that is, a good solvent for a polymer compound, in which the polar term P1 (MPa^{0.5}) of the Hansen solubility parameter is 0 ≤ P1 ≤ 10, and the hydrogen bond term H1 (MPa^{0.5}) of the Hansen solubility parameter is 0 ≤ H1 ≤ 10.

The range of P1 of solvent A is 0 or more, further 0.5 or more, still further 1 or more, particularly 4 or more, and 10 or less, further 8 or less, still further 6 or less, particularly 5 or less.

The range of H1 of solvent A is 0 or more, further 0.5 or more, still further 1 or more, and 10 or less, further 9 or less, still further 8 or less, particularly 5 or less.

The solvent A is not particularly limited as long as it is an organic solvent in which P1 and H1 satisfy the above-described numerical ranges. One mode of solvent A includes, for example, a solvent in which 0 ≤ P1 ≤ 5 and 0 ≤ H1 ≤ 4 (hereinafter referred to as [solvent A1]), a solvent in which 5 < P1 ≤ 10 and 4 < H1 ≤ 10 (hereinafter referred to as [solvent A2]), and the like.

The solvent A is an organic solvent satisfying the above-described conditions, and can be selected from, for example, a ketone solvent, an aliphatic hydrocarbon solvent, an aromatic hydrocarbon solvent (the aromatic hydrocarbon optionally has a substituent such as an alkyl group, an alkoxy group, etc.), a halogenated aliphatic hydrocarbon solvent, a halogenated aromatic hydrocarbon solvent, an ether solvent, and the like.

Specific examples of solvent A are shown below.

**[Table 1]**

| solvent | P1 (MPa^{0.5}) | H1 (MPa^{0.5}) |
|---|---|---|
| methyl ethyl ketone | 9 | 5.1 |
| acetophenone | 8.6 | 3.7 |
| methylene chloride | 7.3 | 7.1 |
| o-dichlorobenzene | 6.3 | 3.3 |
| methyl isobutyl ketone | 6.1 | 4.1 |
| tetrahydrofuran | 5.7 | 8 |
| chlorobenzene | 4.3 | 2 |
| anisole | 4.1 | 6.7 |
| chloroform | 3.1 | 5.7 |
| toluene | 1.4 | 2 |
| xylene | 1 | 3.1 |
| benzene | 0 | 2 |
| cyclohexylbenzene | 0 | 1 |
| heptane | 0 | 0 |
| dioxane | 1.8 | 7.4 |

Preferred examples of solvent A include toluene, xylene, tetrahydrofuran, dioxane, methyl ethyl ketone, methyl isobutyl ketone, heptane and the like, and particularly preferable example is toluene.

### [Solvent B]

The solvent B is a solvent that hardly dissolves a polymer compound, that is, a poor solvent for the polymer compound, in which the polar term P2 (MPa^{0.5}) of the Hansen solubility parameter is 10 < P2 and/or the hydrogen bond term H2 (MPa^{0.5}) of the Hansen solubility parameter is 10 < H2.

The range of P2 of solvent B is usually over 4, further over 6, and still further over 10. The upper limit is not particularly limited and it is, for example, 40 or less, and further 30 or less.

The range of H2 of solvent B is usually over 4, further over 6, and still further over 10. The upper limit is not particularly limited and it is, for example, 40 or less, and further 30 or less.

The solvent B is not particularly limited as long as it is a solvent in which P2 and/or H2 satisfies the above-described numerical ranges. One mode of solvent B includes, for example, a solvent in which 10 < P2 and 10 < H2 (hereinafter referred to as [solvent B1]).

The solvent B is an organic solvent satisfying the above-described conditions, and can be selected from, for example, a nitrile solvent, a ketone solvent, a sulfoxide solvent, an amide solvent, an alcohol solvent (especially an alcohol having 1 to 6 carbon atoms), a carboxylic acid solvent and the like.

Specific examples of solvent B are shown below.

**[Table 2]**

| | | |
|---|---|---|
| solvent | P2 (MPa^{0.5}) | H2 (MPa^{0.5}) |
| acetonitrile | 18 | 6.1 |
| dimethyl sulfoxide | 16.4 | 10.2 |
| N,N-dimethylformamide | 13.7 | 11.3 |
| methanol | 12.3 | 22.3 |
| N-methylpyrrolidone | 12.3 | 7.2 |
| N,N-dimethylacetamide | 11.5 | 10.2 |
| ethylene glycol | 11 | 26 |
| acetone | 10.4 | 7 |
| ethanol | 8.8 | 19.4 |
| acetic acid | 8 | 13.5 |
| 1-propanol | 6.8 | 17.4 |
| 2-propanol | 6.1 | 16.4 |
| 1-butanol | 5.7 | 15.8 |
| tert-butanol | 5.1 | 14.7 |
| cyclohexanol | 4.1 | 13.5 |

More preferable examples of solvent B include methanol, ethanol, 2-propanol, acetone, dimethyl sulfoxide and N,N-dimethylformamide, and particularly preferable one is methanol.

The preferable combination of the first organic solvent and the second organic solvent in the mixed solvent composed of two or more organic solvents includes, for example, a combination in which the first organic solvent at least one selected from solvent A and the second organic solvent is at least one selected from solvent B; a combination in which the first organic solvent at least one selected from solvent A and the second organic solvent is at least one selected from solvent B1; a combination in which the first organic solvent at least one selected from solvent A1 and the second organic solvent is at least one selected from solvent B1; and the like.

Alternatively, the other preferable combination includes, for example, a combination in which the first organic solvent is at least one selected from solvent A and the second organic solvent is at least one selected from solvent A2; a combination in which the first organic solvent is at least one selected from solvent A2 and the second organic solvent is at least one selected from solvent A2; and the like.

The more preferable combination of the first organic solvent and the second organic solvent includes, for example, toluene and methanol, toluene and acetone, methyl isobutyl ketone and methyl ethyl ketone, heptane and 2-propanol, dioxane and N,N-dimethylformamide, methyl ethyl ketone and dimethyl sulfoxide; and the like.

It is preferable for the mixed solvent composed of two or more organic solvents that the first organic solvent contains at least one selected from solvent A (especially solvent A1) that is a good solvent for a polymer compound and the second organic solvent contains at least one selected from solvent B (especially solvent B1) that is a poor solvent for a polymer compound.

The even more preferable combination of the first organic solvent and the second organic solvent includes, for example, toluene and methanol, toluene and acetone, heptane and 2-propanol, dioxane and N,N-dimethylformamide, methyl ethyl ketone and dimethyl sulfoxide, and the like, and the particularly preferable combination is a combination of toluene and methanol.

The use amounts of the first organic solvent and the second organic solvent in the mixed solvent composed of two or more organic solvents are as follows.

From the viewpoint of reducing the polydispersity of a polymer compound, the use amount of the first organic solvent is preferably 20% by mass or more, more preferably 30% by mass or more, and further preferably 40% by mass or more in the mixed solvent. From the viewpoint of depositing a polymer compound in the precipitation step, the use amount is preferably 90% by mass or less, more preferably 80% by mass or less, and further preferably 70% by mass or less in the mixed solvent.

From the viewpoint of reducing the polydispersity of a polymer compound, the use amount of the second organic solvent is preferably 80% by mass or less, more preferably 70% by mass or less, and further preferably 60% by mass or less in the mixed solvent. From the viewpoint of depositing a polymer compound in the precipitation step, the use amount is preferably 10% by mass or more, more preferably 20% by mass or more, and further preferably 30% by mass or more in the mixed solvent.

The mass ratio of the first organic solvent and the second organic solvent (first organic solvent/second organic solvent) is, for example, 1/4 to 9/1, preferably 3/7 to 4/1, and more preferably 2/3 to 7/3.

The precipitation step includes any of a mode of adding a solution containing a polymer compound to a mixed solvent composed of two or more organic solvents, and a mode of adding a mixed solvent composed of two or more organic solvents to a solution containing a polymer compound. From the viewpoint of the properties of the polymer compound to be precipitated and the handling property thereof and the like, the former mode is preferable.

The solution containing a polymer compound may be a solution prepared by dissolving a solid polymer compound in a solvent, may be a post-reaction solution obtained by a polymerization reaction from monomers, or may be a post-purification solution obtained by purifying a polymer compound from the post-reaction solution. Purification of the post-reaction solution includes known purification methods such as liquid separation, chromatography, distillation and the like.

A polymer compound having low polydispersity (Mw/Mn) (that is, close to 1) can be obtained by the precipitation step since low molecular weight components contained in the polymer compound can be effectively removed.

The polydispersity of the polymer compound to be precipitated can be changed by changing the mass ratio of the first organic solvent and the second organic solvent (first organic solvent/second organic solvent) in the precipitation step. For example, in Examples 2 and 3, the mass ratios of the first organic solvent (toluene) and the second organic solvent (acetone) are 1/1 and 1/3, respectively, and the polydispersities of the precipitated polymer compound (P4) are 1.9 and 2.4, respectively. In addition, in Examples 17, 18 and 19, the mass ratios of the first organic solvent (methyl ethyl ketone) and the second organic solvent (dimethyl sulfoxide) were 4/1, 3/2 and 1/1, respectively, and the polydispersities of the precipitated polymer compounds (P21 to P23) are 1.6, 1.7 and 2.1, respectively. That is, in the precipitation step, the larger the mass ratio of the first organic solvent and the second organic solvent (first organic solvent/second organic solvent), the smaller the polydispersity of the polymer compound to be precipitated (closes to 1.) Accordingly, a polymer compound having desired molecular weight and polydispersity can be obtained by adjusting the mass ratio of the first organic solvent and the second organic solvent (first organic solvent/second organic solvent) in the precipitation step.

The solvent of the solution containing a polymer compound is not particularly limited as long as it can dissolve a polymer compound, that is, it is a good solvent for the polymer compound. Examples thereof include solvents mentioned for the first organic solvent, that is, at least one (particularly, one or two) selected from solvent A. Preferred examples thereof include toluene, xylene, tetrahydrofuran, anisole, dimethoxybenzene, cyclohexylbenzene, mixed solvents thereof and the like, and particularly preferred examples thereof include toluene, tetrahydrofuran, and mixed solvents thereof.

The concentration of a polymer compound in the solution containing the polymer compound is not particularly limited and can usually be set based on the solubility of the polymer compound in a solvent. The concentration is usually 0.05% by mass to 15% by mass, preferably 0.1% by mass to 10% by mass, and more preferably 0.5% by mass to 5% by mass.

The temperature of the mixed solution in the precipitation step is usually -100°C to 200°C, preferably 0°C to 150°C, more preferably 10°C to 100°C, further preferably 15°C to 400°C, and particularly preferably 20°C to 30°C.

The precipitation step is preferably performed while stirring the mixed solution. The stirring time is usually 1 minute to 100 hours, and preferably 30 minutes to 10 hours.

The precipitation step can be repeated multiple times as necessary, and can be repeated, for example, about 2 to 5 times. As a result, a polymer compound having smaller polydispersity can be obtained.

The use amount of the mixed solvent composed of two or more organic solvents is usually 1 part by mass or more, preferably 2 parts by mass or more, and more preferably 3 parts by mass or more with respect to 1 part by mass of the solution containing the polymer compound, and it is usually 1000 parts by mass or less, preferably 300 parts by mass or less, and more preferably 100 parts by mass or less.

The polymer compound is a compound obtained by polymerizing predetermined monomers and having two or more repeating units derived from the monomer (hereinafter, also referred to as constitutional units). The polymer compound has molecular weight distribution, and has a polystyrene-equivalent weight-average molecular weight (Mw) in the range of 1 × 10³ to 1 × 10⁸. The analysis of the molecular weight follows the description in the examples.

Specifically, the polymer compound includes, for example, a polymer compound composed of a constitutional unit represented by the formula (1). 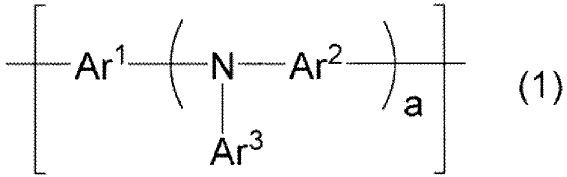 [In the formula,
Ar¹ and Ar² each independently represent a divalent aromatic hydrocarbon group, a divalent heterocyclic group, or a group in which a divalent aromatic hydrocarbon group and a divalent heterocyclic group are bonded, and the foregoing groups optionally have a substituent. When a plurality of Ar² are present, they may be the same or different.
Ar³ represents a monovalent aromatic hydrocarbon group or a monovalent heterocyclic group, and the foregoing groups optionally have a substituent. When a plurality of Ar³ are present, they may be the same or different.
a represents an integer of 0 to 2.]

In the formula (1), as Ar¹ and Ar², a divalent aromatic hydrocarbon group or a divalent heterocyclic group is preferable, and a divalent aromatic hydrocarbon group is more preferable, and these groups optionally have a substituent (particularly, an alkyl group and an aryl group, and these groups may further have a substituent.).

The divalent aromatic hydrocarbon group represented by Ar¹ and Ar² is preferably a group represented by the formula (A-1) to the formula (A-3), the formula (A-8) or the formula (A-9), more preferably a group represented by the formula (A-1) or the formula (A-9).

The divalent heterocyclic group represented by Ar¹ and Ar² is preferably a group represented by the formula (A-24) or the formula (A-35).

In the formula (1), a is preferably 0 or 1.

Examples of the constitutional unit represented by the formula (1) include constitutional units represented by the formula (1-1) to the formula (1-20), preferably constitutional units represented by the formula (1-1) to the formula (1-4), the formula (1-9) to the formula (1-11), the formula (1-15), the formula (1-16) or the formula (1-20), and more preferably constitutional units represented by the formula (1-1) to the formula (1-3), the formula (1-9) to the formula (1-11), the formula (1-15) or the formula (1-20). However, the constitutional unit represented by the formula (1) is not limited to these exemplified constitutional units. 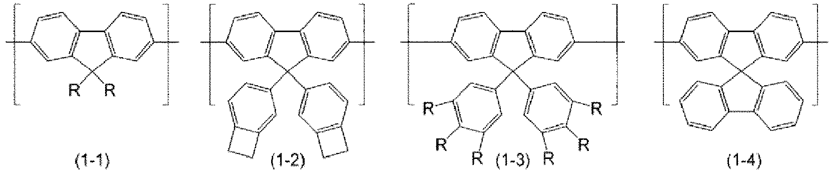 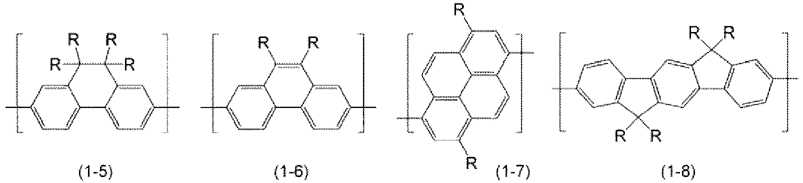 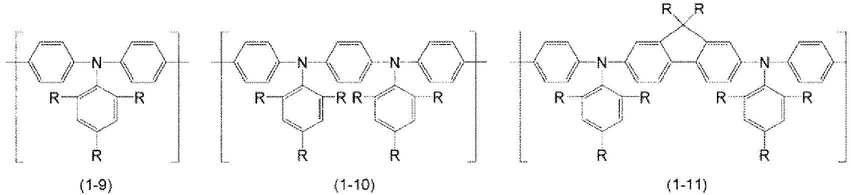 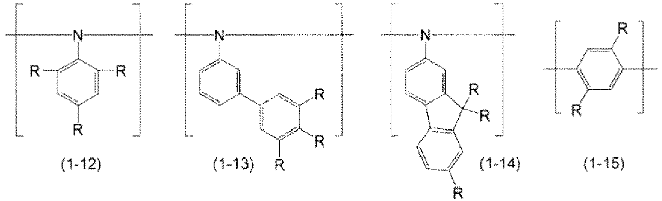 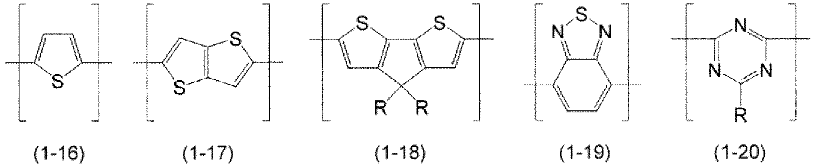 [In the formulae, R represents the same meaning as described above. When a plurality of R are present, they may be the same or different.]

The polymer compound composed of the constitutional unit represented by the formula (1) includes a polymer compound composed of one or two or more constitutional units selected from the above-mentioned constitutional units.

The polymer compound composed of the constitutional unit represented by the formula (1) can be obtained, for example, by polymerizing a monomer containing a chlorine atom or a bromine atom. The polymerization method includes, for example, a method of polymerizing a monomer by the Suzuki coupling reaction, a method of polymerizing by the Buchwald coupling reaction, a method of polymerizing by the Stille coupling reaction, a method of polymerizing by the Kumada coupling reaction, a method of polymerizing by the Yamamoto coupling reaction, an the like, and the method of polymerizing by the Suzuki coupling reaction and the method of polymerizing by the Buchwald coupling reaction are preferable from the viewpoint of ease of structure control.

### 2.3. Solvent treatment step

After the above-described precipitation step, a step of further adding a solvent and treating may be provided in order to facilitate post-treatment such as improving handling of the precipitated polymer compound. This solvent treatment step is a step of performing treatment such as adding a third organic solvent and stirring, after completion of the precipitation step (that is, after bringing a solution containing a polymer compound into contact with a mixed solvent composed of two or more organic solvents to precipitate the polymer compound).

The third organic solvent includes one or more (preferably one or two) solvents selected from the following [solvent C] .

### [Solvent C]

The solvent C is preferably a solvent which hardly dissolves a polymer compound, that is, a poor solvent for the polymer compound. Specifically, a solvent in which the polar term P3 (MPa^{0.5}) of the Hansen solubility parameter is 10 < P3 and/or the hydrogen bond term H3 (MPa^{0.5}) of the Hansen solubility parameter is 10 < H3 is mentioned.

The range of P3 of solvent C is usually over 4, further over 6, and still further over 10. The upper limit is not particularly limited and is, for example, 40 or less, and further 30 or less.

The range of H3 of solvent C is usually over 4, further over 6, and still further over 10. The upper limit is not particularly limited and is, for example, 40 or less, and further 30 or less.

The solvent C is not particularly limited as long as it is a solvent satisfying the numerical ranges of P3 and/or H3 described above. One mode of solvent C includes, for example, a solvent in which 10 < P3 and 10 < H3, and the like.

The solvent C can be selected from, for example, a nitrile solvent, a ketone solvent, a sulfoxide solvent, an amide solvent, an alcohol solvent (especially an alcohol having 1 to 6 carbon atoms), a carboxylic acid solvent, and the like..

More preferable examples of solvent C include methanol, ethanol, 2-propanol, acetone, dimethyl sulfoxide, N,N-dimethylformamide and the like, and particularly preferable example is methanol.

Preferable specific examples of the third organic solvent are desirably the same as preferable specific examples of the second organic solvent. Furthermore, the third organic solvent is preferably the same as the second organic solvent.

The use amount of the third organic solvent is preferably 0.5 part by mass or more, more preferably 1 part by mass or more, and further preferably 1.5 parts by mass or more with respect to 1 part by mass of the first organic solvent used in the precipitation step. Further, it is preferably 20 parts by mass or less, and more preferably 10 parts by mass or less.

The temperature of the mixed solution in the solvent treatment step is usually -100°C to 200°C, preferably 0°C to 150°C, more preferably 10°C to 100°C, further preferably 15°C to 40°C, and particularly preferably 20°C to 30°C.

The solvent treatment step is preferably performed while stirring the mixed liquid after the precipitation step. The stirring time is usually 1 minute to 100 hours, preferably 30 minutes to 10 hours.

### 3. Polymer compound

A polymer compound having sufficiently low polydispersity (Mw/Mn) (that is, close to 1) can be obtained according to the production method of the present invention since low molecular weight components contained in the polymer compound are effectively removed. In addition, a polymer compound having desired polydispersity can also be obtained since the polydispersity of the resultant polymer compound can be adjusted by changing the ratio of the first organic solvent and the second organic solvent in the mixed solvent in the precipitation step. Therefore, the polymer compound obtained by this production method is suitably used as a material for an organic EL device, a material for an organic photoelectric conversion device, a material for an organic transistor device, or the like.

### 4. Method for producing light emitting device of the present invention

The method for producing a light emitting device of the present invention is a method for producing a light emitting device having an anode, a cathode and an organic layer, including a step of forming the above-described organic layer using a polymer compound produced by the above-described method for producing a polymer compound.

The organic layer includes, for example, a hole transporting layer, a hole injection layer, a light emitting layer, an electron transporting layer, and an electron injection layer.

The organic layer can be formed by, for example, a wet method or a dry method.

### EXAMPLES

Examples will be shown below for illustrating the present invention further in detail, but the present invention is not limited thereto.

### <Molecular weight analysis>

The polystyrene-equivalent weight-average molecular weight (Mw), the polystyrene-equivalent number-average molecular weight (Mn) and the polydispersity (Mw/Mn) of a polymer compound were determined by gel permeation chromatography (GPC).

The analysis conditions are as follows.
Measuring device: HLC-8320GPC (manufactured by Tosoh Corporation)
Column: PLgel 10 µm MIXED-B (manufactured by Tosoh Corporation)
Column temperature: 40°C
Mobile phase: tetrahydrofuran
Flow rate: 0.5 mL/min
Detection wavelength: 228 nm

### <Example 1>

A polymer compound (P1) represented by the following formula (A) having Mw/Mn = 3.5 and Mw = 2.4 × 10⁵ was dissolved in toluene to prepare 2.5 g of a 1% by mass solution. This solution was added dropwise at 22°C to a mixed solvent of 5 g of toluene and 5 g of methanol that had been mixed with stirring, and the mixture was further stirred for 30 minutes to precipitate a polymer compound (hereinafter, referred to as "precipitation treatment A"). The precipitated polymer compound (P2) had Mw/Mn = 2.9 and Mw = 2.5 × 10⁵. 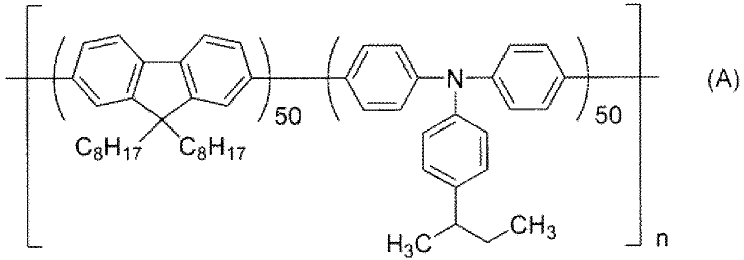 [In the formula, n represents the number of repeating units.]

### <Example 2>

The precipitation treatment A was performed in the same manner as in Example 1 except that a mixed solvent of 5 g of toluene and 5 g of acetone was used instead of the mixed solvent of 5 g of toluene and 5 g of methanol. The precipitated polymer compound (P3) had Mw/Mn = 1.9 and Mw = 2.6 × 10⁵.

### <Example 3>

The precipitation treatment A was performed in the same manner as in Example 1 except that a mixed solvent of 2.5 g of toluene and 7.5 g of acetone was used instead of the mixed solvent of 5 g of toluene and 5 g of methanol. The precipitated polymer compound (P4) had Mw/Mn = 2.4 and Mw = 2.5 × 10⁵.

### <Example 4>

A polymer compound (P1) represented by the formula (A) having Mw/Mn = 3.5 and Mw = 2.4 × 10⁵ was dissolved in tetrahydrofuran to prepare 2.5 g of a 1% by mass solution. This solution was added dropwise at 22°C to a mixed solvent of 7.5 g of toluene and 2.5 g of methanol that had been mixed with stirring, and the mixture was further stirred for 30 minutes. The precipitated polymer compound (P5) had Mw/Mn = 2.2 and Mw = 2.9 × 10⁵.

### <Example 5>

An inert gas atmosphere was prepared in a reaction vessel, then, the compound (M1) (4.3 mmol), the compound (M2) (4.4 mmol), dichlorobis[tris(2-methoxyphenyl)phosphine]palladium (0.026 mmol), toluene (41 g) and a 20% by mass tetraethylammonium hydroxide aqueous solution (30 g) were added, and the mixture was stirred at reflux temperature for 3 hours. After polymerization, toluene was added to the solution to prepare a 1% by mass solution. After that, the solution was liquid-separated to remove the aqueous layer, and washed with an aqueous hydrochloric acid solution, an aqueous ammonia solution and water in this order. Thus, 400 g of a toluene solution of the polymer compound (P6) having Mw/Mn = 3.7 and Mw = 2.5 × 10⁵ represented by the formula (A) was obtained.

Two point five grams (2.5 g) of this toluene solution was added dropwise at 22°C to a mixed solvent of 5 g of toluene and 5 g of methanol that had been mixed with stirring, and the mixture was further stirred for 30 minutes. The precipitated polymer compound (P7) had Mw/Mn = 2.9 and Mw = 2.7 × 10⁵.

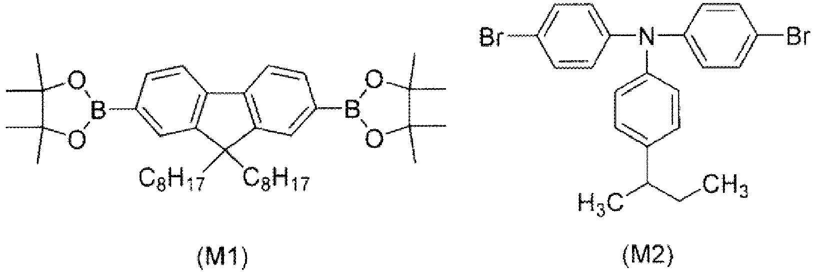

### <Example 6>

A polymer compound (P8) represented by the following formula (B) having Mw/Mn = 2.3 and Mw = 1.3 × 10⁵ was dissolved in toluene to prepare 2.5 g of a 1% by mass solution. This solution was added dropwise at 22°C to a mixed solvent of 8 g of toluene and 2 g of methanol that had been mixed with stirring, and the mixture was further stirred for 30 minutes, to precipitate a polymer compound (hereinafter, referred to as "precipitation treatment B") . The precipitated polymer compound (P9) had Mw/Mn = 1.9 and Mw = 1.4 × 10⁵. 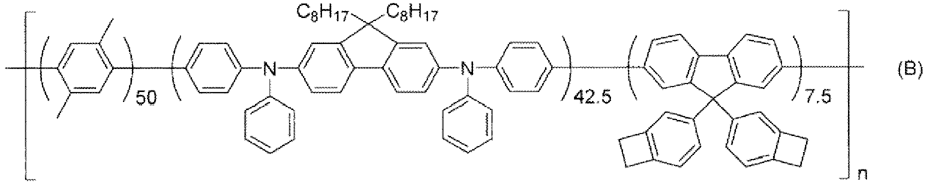 [In the formula, n represents the number of repeating units.]

### <Example 7>

The precipitation treatment B was performed in the same manner as in Example 6 except that a mixed solvent of 6 g of toluene and 4 g of methanol was used instead of the mixed solvent of 8 g of toluene and 2 g of methanol. The precipitated polymer compound (P10) had Mw/Mn = 2.0 and Mw = 1.4 × 10⁵.

### <Example 8>

The precipitation treatment B was performed in the same manner as in Example 6 except that a mixed solvent of 8 g of methyl isobutyl ketone and 2 g of methyl ethyl ketone was used instead of the mixed solvent of 8 g of toluene and 2 g of methanol. The precipitated polymer compound (P11) had Mw/Mn = 1.5 and Mw = 2.1 × 10⁵.

### <Example 9>

The precipitation treatment B was performed in the same manner as in Example 6 except that a mixed solvent of 6 g of methyl isobutyl ketone and 4 g of methyl ethyl ketone was used instead of the mixed solvent of 8 g of toluene and 2 g of methanol. The precipitated polymer compound (P12) had Mw/Mn = 1.6 and Mw = 2.1 × 10⁵.

### <Example 10>

The precipitation treatment B was performed in the same manner as in Example 6 except that a mixed solvent of 4 g of methyl isobutyl ketone and 6 g of methyl ethyl ketone was used instead of the mixed solvent of 8 g of toluene and 2 g of methanol. The precipitated polymer compound (P13) had Mw/Mn = 1.7 and Mw = 2.1 × 10⁵.

### <Example 11>

The precipitation treatment B was performed in the same manner as in Example 6 except that a mixed solvent of 2 g of methyl isobutyl ketone and 8 g of methyl ethyl ketone was used instead of the mixed solvent of 8 g of toluene and 2 g of methanol. The precipitated polymer compound (P14) had Mw/Mn = 1.7 and Mw = 2.0 × 10⁵.

### <Example 12>

A polymer compound (P15) represented by the following formula (C) having Mw/Mn = 2.6 and Mw = 1.0 × 10⁵ was dissolved in toluene to prepare 2.5 g of a 1% by mass solution. This solution was added dropwise at 22°C to a mixed solvent of 8 g of heptane and 2 g of 2-propanol that had been mixed while stirring, and the mixture was further stirred for 30 minutes to precipitate a polymer compound (hereinafter, referred to as "precipitation treatment C".) The precipitated polymer compound (P16) had Mw/Mn = 1.9 and Mw = 1.1 × 10⁵. 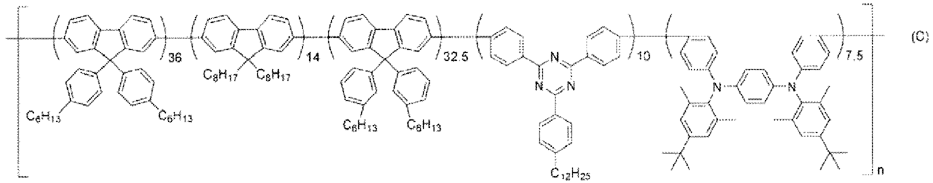 [In the formula, n represents the number of repeating units.]

### <Example 13>

The precipitation treatment C was performed in the same manner as in Example 12 except that a mixed solvent of 6 g of heptane and 4 g of 2-propanol was used instead of the mixed solvent of 8 g of heptane and 2 g of 2-propanol. The precipitated polymer compound (P17) had Mw/Mn = 2.0 and Mw = 1.1 × 10⁵.

### <Example 14>

The precipitation treatment C was performed in the same manner as in Example 12 except that a mixed solvent of 4 g of heptane and 6 g of 2-propanol was used instead of the mixed solvent of 8 g of heptane and 2 g of 2-propanol. The precipitated polymer compound (P18) had Mw/Mn = 2.2 and Mw = 1.0 × 10⁵.

### <Example 15>

The precipitation treatment C was performed in the same manner as in Example 12 except that a mixed solvent of 4 g of dioxane and 6 g of N,N-dimethylformamide was used instead of the mixed solvent of 8 g of heptane and 2 g of 2-propanol. The precipitated polymer compound (P19) had Mw/Mn = 1.5 and Mw = 1.4 × 10⁵.

### <Example 16>

The precipitation treatment C was performed in the same manner as in Example 12 except that a mixed solvent of 2 g of dioxane and 8 g of N,N-dimethylformamide was used instead of the mixed solvent of 8 g of heptane and 2 g of 2-propanol. The precipitated polymer compound (P20) had Mw/Mn = 1.7 and Mw = 1.2 × 10⁵.

### <Example 17>

The precipitation treatment C was performed in the same manner as in Example 12 except that a mixed solvent of 8 g of methyl ethyl ketone and 2 g of dimethyl sulfoxide was used instead of the mixed solvent of 8 g of heptane and 2 g of 2-propanol. The precipitated polymer compound (P21) had Mw/Mn = 1.6 and Mw = 1.4 × 10⁵.

### <Example 18>

The precipitation treatment C was performed in the same manner as in Example 12 except that a mixed solvent of 6 g of methyl ethyl ketone and 4 g of dimethyl sulfoxide was used instead of the mixed solvent of 8 g of heptane and 2 g of 2-propanol. The precipitated polymer compound (P22) had Mw/Mn = 1.7 and Mw = 1.1 × 10⁵.

### <Example 19>

The precipitation treatment C was performed in the same manner as in Example 12 except that a mixed solvent of 4 g of methyl ethyl ketone and 6 g of dimethyl sulfoxide was used instead of the mixed solvent of 8 g of heptane and 2 g of 2-propanol. The precipitated polymer compound (P23) had Mw/Mn = 2.1 and Mw = 1.1 × 10⁵.

### <Example 20>

The precipitation treatment C was performed in the same manner as in Example 12 except that a mixed solvent of 5 g of toluene and 5 g of methanol was used instead of the mixed solvent of 8 g of heptane and 2 g of 2-propanol. The precipitated polymer compound (P24) had Mw/Mn = 1.9 and Mw = 1.0 × 10⁵.

### <Example 21>

After performing the same precipitation treatment C as in Example 20, 5 g of methanol was added to the slurry after precipitation, and the mixture was further stirred for 30 minutes. The precipitated polymer compound (P25) had Mw/Mn = 2.0 and Mw = 1.0 × 10⁵.

### <Example 22>

After performing the same precipitation treatment C as in Example 20, 12.5 g of methanol was added to the slurry after precipitation, and the mixture was further stirred for 30 minutes. The precipitated polymer compound (P26) had Mw/Mn = 2.1 and Mw = 1.0 × 10⁵.

### <Example 23>

The precipitation treatment C was performed in the same manner as in Example 12 except that a mixed solvent of 2.5 g of toluene and 7.5 g of methanol was used instead of the mixed solvent of 8 g of heptane and 2 g of 2-propanol. The precipitated polymer compound (P27) had Mw/Mn = 2.2 and Mw = 1.0 × 10⁵.

### <Example 24>

After performing the same precipitation treatment C as in Example 23, 12.5 g of methanol was added to the slurry after precipitation, and the mixture was further stirred for 30 minutes. The precipitated polymer compound (P28) had Mw/Mn = 2.2 and Mw = 1.0 × 10⁵.

### <Comparative Example 1>

The precipitation treatment C was performed in the same manner as in Example 12 except that a mixed solvent of 7.5 g of acetone and 2.5 g of methanol was used instead of the mixed solvent of 8 g of heptane and 2 g of 2-propanol. The precipitated polymer compound (P29) had Mw/Mn = 2.6 and Mw = 1.0 × 10⁵.

### <Comparative example 2>

The precipitation treatment C was performed in the same manner as in Example 12 except that a mixed solvent of 5 g of acetone and 5 g of methanol was used instead of the mixed solvent of 8 g of heptane and 2 g of 2-propanol. The precipitated polymer compound (P30) had Mw/Mn = 2.6 and Mw = 1.0 × 10⁵.

### <Comparative example 3>

The precipitation treatment C was performed in the same manner as in Example 12 except that a mixed solvent of 2.5 g of acetone and 7.5 g of methanol was used instead of the mixed solvent of 8 g of heptane and 2 g of 2-propanol. The precipitated polymer compound (P31) had Mw/Mn = 2.6 and Mw = 1.0 × 10⁵.

### <Comparative example 4>

The precipitation treatment C was performed in the same manner as in Example 12 except that a mixed solvent of 7.5 g of ethanol and 2.5 g of methanol was used instead of the mixed solvent of 8 g of heptane and 2 g of 2-propanol. The precipitated polymer compound (P32) had Mw/Mn = 2.6 and Mw = 1.0 × 10⁵.

### <Comparative Example 5>

The precipitation treatment C was performed in the same manner as in Example 12 except that a mixed solvent of 5 g of ethanol and 5 g of methanol was used instead of the mixed solvent of 8 g of heptane and 2 g of 2-propanol. The precipitated polymer compound (P33) had Mw/Mn = 2.6 and Mw = 1.0 × 10⁵.

### <Comparative example 6>

The precipitation treatment C was performed in the same manner as in Example 12 except that a mixed solvent of 2.5 g of ethanol and 7.5 g of methanol was used instead of the mixed solvent of 8 g of heptane and 2 g of 2-propanol. The precipitated polymer compound (P34) had Mw/Mn = 2.6 and Mw = 1.0 × 10⁵.

The results of the polydispersity of the polymer compounds obtained in the above-described Examples and Comparative Examples are shown below.

**[Table 3]**

| | (Mw/Mn) of polymer before precipitation treatment | (Mw/Mn) of polymer after precipitation treatment |
|---|---|---|
| Example 1 | P1 (3.5) | P2 (2.9) |
| Example 2 | P1 (3.5) | P3 (1.9) |
| Example 3 | P1 (3.5) | P4 (2.4) |
| Example 4 | P1 (3.5) | P5 (2.2) |
| Example 5 | P6 (3.7) | P7 (2.9) |
| Example 6 | P8 (2.3) | P9 (1.9) |
| Example 7 | P8 (2.3) | P10 (2.0) |
| Example 8 | P8 (2.3) | P11 (1.5) |
| Example 9 | P8 (2.3) | P12 (1.6) |
| Example 10 | P8 (2.3) | P13 (1.7) |
| Example 11 | P8 (2.3) | P14 (1.7) |
| Example 12 | P15 (2.6) | P16 (1.9) |
| Example 13 | P15 (2.6) | P17 (2.0) |
| Example 14 | P15 (2.6) | P18 (2.2) |
| Example 15 | P15 (2.6) | P19 (1.5) |
| Example 16 | P15 (2.6) | P20 (1.7) |
| Example 17 | P15 (2.6) | P21 (1.6) |
| Example 18 | P15 (2.6) | P22 (1.7) |
| Example 19 | P15 (2.6) | P23 (2.1) |
| Example 20 | P15 (2.6) | P24 (1.9) |
| Example 21 | P15 (2.6) | P25 (2.0) (after further adding methanol) |
| Example 22 | P15 (2.6) | P26 (2.1) (after further adding methanol) |
| Example 23 | P15 (2.6) | P27 (2.2) |
| Example 24 | P15 (2.6) | P28 (2.2) (after further adding methanol) |
| Comparative Example 1 | P15 (2.6) | P29 (2.6) |
| Comparative Example 2 | P15 (2.6) | P30 (2.6) |
| Comparative Example 3 | P15 (2.6) | P31 (2.6) |
| Comparative Example 4 | P15 (2.6) | P32 (2.6) |
| Comparative Example 5 | P15 (2.6) | P33 (2.6) |
| Comparative Example 6 | P15 (2.6) | P34 (2.6) |

As shown in the above-described table, it was revealed that the polydispersity of the polymer compound can be reduced in Examples 1 to 24 which employ the precipitation step of the present invention. In contrast, in Comparative Examples 1 to 6, the polydispersity of the polymer compound did not decrease and did not change.

Further, it became clear that, in the precipitation step of the present invention, the polydispersity of the polymer compound to be precipitated can be adjusted by changing the mass ratio of the first organic solvent and the second organic solvent (first organic solvent/second organic solvent).

Specifically, in Examples 2 and 3, the mass ratios of the first organic solvent (toluene) and the second organic solvent (acetone) were 1/1 and 1/3, respectively, and the polydispersities of the precipitated polymer compound (P4) were 1.9 and 2.4, respectively. In addition, in Examples 17, 18 and 19, the mass ratios of the first organic solvent (methyl ethyl ketone) and the second organic solvent (dimethyl sulfoxide) were 4/1, 3/2 and 1/1, respectively, and the polydispersities of the precipitated polymer compounds (P21 to P23) were 1.6, 1.7 and 2.1, respectively. It was found from this that, in the precipitation step, as the mass ratio of the first organic solvent and the second organic solvent (first organic solvent/second organic solvent) increases, the polydispersity of the polymer compound to be precipitated decreases (closes to 1).

### [Industrial availability]

The method of the present invention can produce a polymer compound having sufficiently low polydispersity. Hence, the polymer compound produced by this method is suitably used as a material for an organic EL device and the like.

## Claims

1. A method for producing a polymer compound, comprising a step of bringing a solution containing a polymer compound into contact with a mixed solvent composed of two or more organic solvents to precipitate the polymer compound, wherein
the two or more organic solvents are composed of a first organic solvent and a second organic solvent which are different from each other,
the first organic solvent is at least one selected from solvent A, and the second organic solvent is at least one selected from solvent A and solvent B:
[Solvent A]
A solvent in which the polar term P1 (MPa^{0.5}) of the Hansen solubility parameter is 0 ≤ P1 ≤ 10, and the hydrogen bond term H1 (MPa^{0.5}) of the Hansen solubility parameter is 0 ≤ H1 ≤ 10,
[Solvent B]
A solvent in which the polar term P2 (MPa^{0.5}) of the Hansen solubility parameter is 10 < P2 and/or the hydrogen bond term H2 (MPa^{0.5}) of the Hansen solubility parameter is 10 < H2.

2. The production method according to Claim 1, wherein said first organic solvent is at least one selected from solvent A, and said second organic solvent is at least one selected from solvent B.

3. The production method according to Claim 2, wherein said first organic solvent is at least one selected from solvent A, and said second organic solvent is at least one selected from solvent B1.
[Solvent B1]
A solvent in which the polar term P2 (MPa^{0.5}) of the Hansen solubility parameter is 10 < P2, and the hydrogen bond term H2 (MPa^{0.5}) of the Hansen solubility parameter is 10 < H2.

4. The production method according to Claim 3, wherein said first organic solvent is at least one selected from solvent A1, and said second organic solvent is at least one selected from solvent B1.
[Solvent A1]
A solvent in which the polar term P1 (MPa^{0.5}) of the Hansen solubility parameter is 0 ≤ P1 ≤ 5, and the hydrogen bond term H1 (MPa^{0.5}) of the Hansen solubility parameter is 0 ≤ H1 ≤ 4.

5. The production method according to Claim 1, wherein said first organic solvent is at least one selected from solvent A, and said second organic solvent is at least one selected from solvent A.

6. The production method according to Claim 5, wherein said first organic solvent is at least one selected from solvent A, and said second organic solvent is at least one selected from solvent A2.
[Solvent A2]
A solvent in which the polar term P1 (MPa^{0.5}) of the Hansen solubility parameter is 5 < P1 ≤ 10 and the hydrogen bond term H1 (MPa^{0.5}) of the Hansen solubility parameter is 4 < H1 ≤ 10.

7. The production method according to Claim 6, wherein said first organic solvent is at least one selected from solvent A2, and said second organic solvent is at least one selected from solvent A2.

8. The production method according to any one of Claims 1 to 7, further comprising a solvent treatment step of adding a third organic solvent after said precipitation step, wherein the third organic solvent is at least one selected from solvent C:
[Solvent C]
A solvent in which the polar term P3 (MPa^{0.5}) of the Hansen solubility parameter is 10 < P3 and/or the hydrogen bond term H3 (MPa^{0.5}) of the Hansen solubility parameter is 10 < H3.

9. The production method according to any one of Claims 1 to 8, wherein said polymer compound is a polymer compound composed of a constitutional unit represented by the formula (1) : 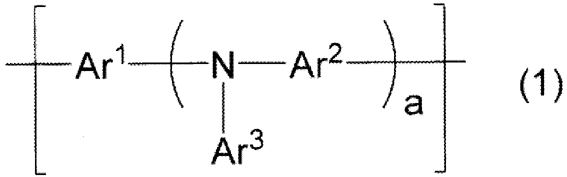 wherein,
Ar¹ and Ar² each independently represent a divalent aromatic hydrocarbon group, a divalent heterocyclic group, or a group in which a divalent aromatic hydrocarbon group and a divalent heterocyclic group are bonded, and the foregoing groups optionally have a substituent, when a plurality of Ar² are present, they may be the same or different,
Ar³ represents a monovalent aromatic hydrocarbon group or a monovalent heterocyclic group, and the foregoing groups optionally have a substituent, when a plurality of Ar³ are present, they may be the same or different,
a represents an integer of 0 to 2.

10. A method for adjusting the polydispersity of a polymer compound, comprising a precipitation step of bringing a solution containing a polymer compound into contact with a mixed solvent composed of two or more organic solvents to precipitate the polymer compound, wherein
the two or more organic solvents include a first organic solvent and a second organic solvent which are different from each other, and
the first organic solvent is at least one selected from solvent A, and the second organic solvent is at least one selected from solvent A and solvent B:
[Solvent A]
A solvent in which the polar term P1 (MPa^{0.5}) of the Hansen solubility parameter is 0 ≤ P1 ≤ 10, and the hydrogen bond term H1 (MPa^{0.5}) of the Hansen solubility parameter is 0 ≤ H1 ≤ 10,
[Solvent B]
A solvent in which the polar term P2 (MPa^{0.5}) of the Hansen solubility parameter is 10 < P2 and/or the hydrogen bond term H2 (MPa^{0.5}) of the Hansen solubility parameter is 10 < H2.

11. A method for producing a light emitting device having an anode, a cathode and an organic layer, comprising a step of forming said organic layer using a polymer compound produced by the method for producing a polymer compound according to any one of Claims 1 to 9.
